# EUROPEAN PATENT SPECIFICATION

(11) **EP 3 968 600 B1**
(45) Date of publication and mention of the grant of the patent: **06.11.2024**
(21) Application number: 20195710.7
(22) Date of filing: 11.09.2020
(51) Int. Cl.: H04L 67/125, H04L 67/145, H04L 67/141, H04L 67/55

(54) **CONTROLLING A COMMUNICATION BETWEEN A VEHICLE AND A BACKEND DEVICE**
STEUERUNG EINER KOMMUNIKATION ZWISCHEN EINEM FAHRZEUG UND EINER BACKEND-VORRICHTUNG
COMMANDE D'UNE COMMUNICATION ENTRE UN VÉHICULE ET UN DISPOSITIF DORSAL

(43) Date of publication of application: 16.03.2022
(73) Proprietor: VOLKSWAGEN AG, 38440 Wolfsburg (DE)
(72) Inventor: Bas, Frederik, 5262 EW Vught (NL)

(56) References cited:
- EP-A1- 1 670 213
- CN-A- 106 161 586
- CN-A- 106 856 502
- CN-A- 107 819 642
- US-A1- 2015 281 374
- US-A1- 2019 173 951
- US-B1- 8 736 438

## Description

The invention is related to a method for controlling a communication between a vehicle and at least one backend device in a vehicle-to-cloud-system, especially from the vehicle side of the system, according to the independent method claim. Further, the invention is related to an electronic control unit according to the independent device claim. Furthermore, the invention is related to a vehicle comprising a corresponding electronic control unit according to the second independent device claim. Moreover, the invention is related to a computer program product for a corresponding method according to the independent product claim.

Vehicle communication systems using a publish-subscribe messaging protocol are basically known, for example from DE 10 2018 130 216 A1 and CN 106 856 502 A. By establishing a connection between a vehicle and a backend device, for example cloud server, the vehicle sends a connect message to the backend device with a defined keep alive timer. If the open connection is not used for a time set with the keep alive timer, the vehicle will generate a ping request message and expect to receive a ping response message from the backend device to keep the connection open. Ping messages have no useful content and cause non-useful traffic for the network. CN 106 161 586 B discloses a server-vehicle communication architecture wherein the server sets a keep alive timeout longer than a timeout set by the vehicle in order to enable the maintenance of an open connection between vehicle and server for the issuing of commands from server to vehicle. However, the release of the connection is not prevented if connection is command-idle for a longer period than the timeout set by the server.

The aim of the present invention is to provide a method, as claimed in claim 1, for controlling a communication between a vehicle and at least one backend device in a vehicle-to-cloud-system, especially from the vehicle side of the system, with improved connectivity. The aim of the present invention is especially to provide a method for controlling a communication between a vehicle and at least one backend device in a vehicle-to-cloud-system, which enables to keep the connection between the vehicle and the backend device open in an easy, but useful way, preferably without non-useful traffic for the network. Also, the aim of the invention is to provide a corresponding electronic control unit for the vehicle, as claimed in claim 8, a corresponding vehicle according to claim 12 and a related computer program product as claimed in claim 14 for the inventive method. Preferred embodiments are covered by the appended dependent claims.

The invention and its further developments as well as its advantages will be explained in more detail below using figures. The figures show schematically:

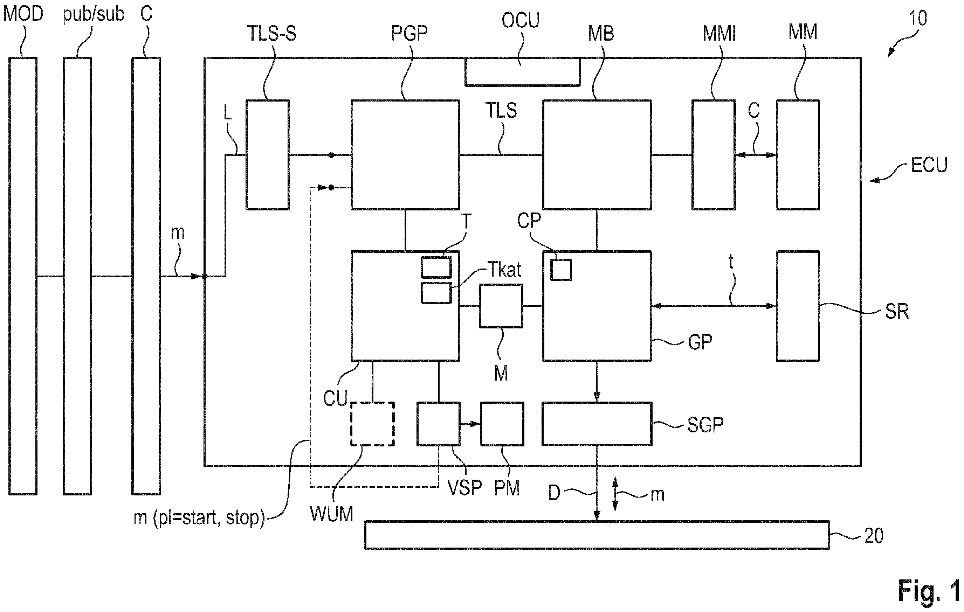

Fig. 1 a schematic design of an electronic control unit within the meaning of the invention.

Figure 1 serves to show different aspects of the invention, such as a method for controlling a communication between a vehicle 10 and at least one backend device 20 (for example a cloud server) in a vehicle-to-cloud-system, a corresponding electronic control unit ECU, a corresponding vehicle 10 (not shown in detail for reasons of simplicity only) as well as a corresponding computer program product. Furthermore, a corresponding vehicle-to-cloud-system may be also provided.

Embodiments of the method for controlling a communication between the vehicle 10 and the at least one backend device 20 comprise the following. First, at least one (network) connection D is established between the vehicle 10 and the at least one backend device 20 with a keep alive timer Tkat, especially by an online connectivity unit OCU of an electronic control unit ECU of the vehicle 10 sending a connect and/or subscribe message m to the backend device 20. Additionally, a timer T (may also be called keep open timer) is set smaller (or less) than or equal to the keep alive timer Tkat. A message m is sent from the vehicle 10 to the at least one backend device 20. The message contains a payload pl. The message m may be a connect, subscribe or a publish message- The message m is sent, if no communication has occurred between the vehicle 10 and the at least one backend device 20 within the timer T, that is when no messages m between the vehicle 10 and the at least one backend device 20 were sent within the timer T, in order to keep the connection D open.

The idea is to provide a useful message m containing a payload pl to keep the connection D open, without waste to the network with non-useful messages. That is, the connection D is kept op with messages with payload without using messages sent for the sole purpose to keep the connection upon instead or additionally. The useful message m is sent just inside the keep alive timer Tkat as maximum.

For this purpose, a timer T is set. The timer T may be set as the keep alive timer Tkat minus 1 second. Alternatively, the timer T may be set as a time in a range of 0,5 to 0,99, especially 0,7 to 0,95, preferably 0,9 times the time of the keep alive timer Tkat. Thus, an easy mechanism to set a timer T may be provided.

It is possible that a user may set the timer T manually, for example by operating an input device, for example in the form of a display device at a vehicle dashboard 12.

Instead of a manual setting of the timer or in addition to this, the timer T may be set automatically by an electronic control unit ECU of the vehicle 10. Thus, automatic setting of the timer T may be provided. In such case a confirmation and/or adjustment possibility of the automatically set timer T may be provided for a user of the vehicle 10, for example by operating an input device, for example in the form of a display device at a vehicle dashboard.

Before sending the message m, a verification may be carried out, if sending is possible, wherein especially a communication test to the backend device 20 may be carried out.

With respect to the message m, the payload pl may provide information about a vehicle state (such as pl=start or stop). In this case, the message m may be published by a vehicle state provider VSP. The vehicle state provider VSP may be connected to a power manager PM of the vehicle 10. To send the vehicle state start or stop, the added information to the message m cannot be too large. No answer to such message m is needed. Also, when knowing the vehicle 10 state start or stop, the backend device 20 may optimize many online services for the vehicle 10.

Instead of, or in addition to, a vehicle state start or stop, the payload pl in the message m may contain application-specific data from at least one vehicle device MOD. In this case, the message m may be published by at least one of the following vehicle devices MOD:
- sensor device, such as crash-sensor, velocity sensor, and so on,
- safety device, such as breakdown call, emergency call,
- environment device, such as weather forecast, pollutant load sensor, environmental one detection unit,
- information device, for example for online traffic information, online destination import, online route import, online Point-of-Interest (POI) search, my POIs, petrol stations, parking spaces, vehicle state report, time manager, weather, news and so on,
- entertainment device, for example for streaming services, and/or
- comfort device, such as door closing detectors, light off detectors, parking position detectors, vehicle state and/or condition detector, trip data base, user calendar, information call and so on.

The part of the electronic control unit ECU shown in figure 1 may also be called online connectivity unit OCU. The electronic control unit ECU has a memory M, in which a program code is stored, and a computing unit CU, wherein when carrying out the program code by the computing unit CU, a method may be performed as described above.

In the embodiment depicted in figure 1, the electronic control unit ECU comprises a vehicle state provider VSP configured to provide the payload pl in the message m. Additionally, the electronic control unit ECU comprises a power manager PM connected to the vehicle state provider VSP. Nevertheless, the invention may provide that the electronic control unit ECU comprises a wakeup manager WUM, whereas the wakeup manager WUM may be deactivated or inactive, when the method according to one of the proceeding claims is performed. Thus, the wakeup manager WUM may provide a fail back option to reactivate the connection D by sending a PING request message to the at least one corresponding backend device 20.

The electronic control unit ECU may provide connectivity subunits C, so called Message Queuing Telemetry Transport (MQTT) clients, for the vehicle devices MOD. The backend device 20 may then be called MQTT server. Figure 1 shows only schematically the example of one vehicle device MOD and one backend device 20, wherein a plurality of vehicle devices MOD and a variety of backend devices 20 may be provided within the meaning of the invention.

The vehicle devices MOD may subscribe to a publish-subscribe messaging environment pub/sub using different topics t provided by the at least one backend device 20 or even various backend devices 20. The publish-subscribe messaging environment pub/sub may use for example, the MQTT protocol. The at least one backend device 20 or even various backend devices 20 may provide mobile online services (or in other words cloud-computing applications) for the vehicle devices MOD.

As it may be further seen from figure 1, the electronic control unit ECU may comprise a managing connecting gateway GP for routing the messages m between a plurality of vehicle devices MOD and a variety of backend devices 20, whereas the message m is transmitted by the managing connecting gateway GP to the variety of backend devices 20. The managing connecting gateway GP may provide bridges to the various backend devices 20 for different vehicle devices MOD according to the topics t to which the vehicle devices MOD are subscribed.

As figure 1 schematically indicates, the electronic control unit ECU may comprise a project connecting gateway PGP (for example in form of local MQTT broker of Mosquitto type) connected to the plurality of the connectivity subunits C over corresponding communication lines L. The project connecting gateway PGP is connected to the a managing connecting gateway GP over a communication line TLS by means of a TLS-Server TLS-S. The project connecting gateway PGP may provide a MQTT bridge MB to the managing connecting gateway GP.

At the MQTT bridge MB the managing connecting gateway GP may use a manifest manager MM and an MQTT manifest manager interface MMI to identify the connectivity subunits C connected to the project connecting gateway PGP. Further, the managing connecting gateway GP may use a service router SR to translate the topics t to which the connectivity subunits C are subscribed.

Advantageously the managing connecting gateway GP may comprise a subscription mapping repository Map for the different topics t provided by various backend devices X, Y, Z and for the connectivity subunits C subscribed to the different topics t. The managing connecting gateway GP may address messages m using a topic routing to distribute the messages m to the right backend device 20. If a message m published by one vehicle device MOD has a topic t that is supported by multiple backend devices 20, then this message m may be correspondingly forwarded to matching backend devices 20. Also, if a message m published by a backend device 20 has a topic t to which multiple vehicle devices MOD are subscribed, this message m may be correspondingly forwarded to matching vehicle devices MOD.

The managing connecting gateway GP may comprise a proxy server SGP to translate the messages m and/or to provide authentication and/or authorization between the plurality of the vehicle device MOD and the various backend devices 20. The invention may foresee that the managing connecting gateway GP decrypts the messages m for purposes of routing to the various backend devices 20. After assigning messages m to the corresponding backend devices 20, the messages m may be encrypted again.

If a plurality of backend devices 20 are connected to the vehicle 10, the message m containing the payload pl will be transmitted by the managing connecting gateway GP to all backend devices 20 to keep all bridges or all connections D to all backend devices 20 open.

The above description of the figures describes the present invention only in the context of examples. Of course, individual features of the embodiments may be combined with each other, provided that said combinations are encompassed within the scope of the invention as defined by the appended claims.

### Reference signs

- 10: vehicle

- 20: backend device
- pub/sub: publish-subscribe messaging environment
- t: topic

- m: message
- pl: payload

- D: connection

- T: timer
- Tkat: keep alive timer

- ECU: electronic control unit
- OCU: online connectivity unit
- CU: computing unit
- M: memory

- VSP: vehicle state provider
- start, stop: vehicle state

- VUM: wake up manager

- PM: power manager

- C: connectivity subunits

- MOD: vehicle device

- GP: managing connecting gateway
- Map: subscription mapping repository

- PGP: project connecting gateway
- MB: MQTT bridge

- MM: manifest manager
- MMI: MQTT manifest manager interface

- SR: service router

- TLS: TLS communication line
- TLS-S: TLS server
- L: communication line

- SGP: proxy server

## Claims

1. A method for controlling a communication between a vehicle (10) and at least one backend device (20) in a vehicle-to-cloud-system, the method comprising:
- establishing a connection (D) between the vehicle (10) and the at least one backend device (20) with a keep alive timer (Tkat);
- setting a timer (T) less than or equal to the keep alive timer (Tkat); and
- sending a message (m) containing a payload (pl) from the vehicle (10) to the at least one backend device (20), if no communication between the vehicle (10) and the at least one backend device (20) has occurred within the timer (T), in order to keep the connection (D) open,
- wherein
- the timer (T) is set manually by a user of the vehicle (10) and/or automatically by an electronic control unit (ECU) of the vehicle (10).

2. The method according to claim 1,
**characterized in that**
the payload (pl) in the message (m) contains a vehicle state (start, stop), and/or the message (m) is published by a vehicle state provider (VSP).

3. The method according to claim 1 or 2,
**characterized in that**
the payload (pl) in the message (m) contains application-specific data from at least one vehicle device (MOD) and/or the message (m) is published by at least one of the following vehicle devices (MOD):
- sensor device,
- safety device,
- environment device,
- information device,
- entertainment device, and/or
- comfort device.

4. A method according to one of the preceding claims,
**characterized in that**
the timer (T) is set as the keep alive timer (Tkat) minus 1 second or the timer (T) is set to a time in a range of 0,5 to 0,99, especially 0,7 to 0,95, preferably 0,9 times the time of the keep alive timer (Tkat).

5. A method according to one of the preceding claims,
**characterized in that**
the timer (T) is set manually by a user of the vehicle (10) by operating an input device, preferably a display device at a vehicle dashboard, of the vehicle (10).

6. The method according to the preceding claim,
**characterized in that**
a confirmation and/or adjustment possibility of the timer (T) is provided for a user of the vehicle (10), especially by operating an input device, for example a display device at a vehicle dashboard, of the vehicle (10).

7. The method according to one of the preceding claims,
**characterized in that**
the method further comprises, before sending the message, carrying out a verification if sending is possible, wherein especially a communication test to the backend device (20) is carried out.

8. An electronic control unit (ECU) comprising:
a memory (M), in which a program code is stored, and
a computing unit (CU), wherein when carrying out the program code by the computing unit (CU), a method according to one of the preceding claims is performed.

9. The electronic control unit (ECU) according to the preceding claim,
**characterized in that**
the electronic control unit (ECU) comprises a vehicle state provider (VSP) configured to provide the payload (pl) in the message (m),
wherein especially the electronic control unit (ECU) comprises a power manager (PM) connected to the vehicle state provider (VSP).

10. The electronic control unit (ECU) according to one of the preceding claims 8 or 9, **characterized in that**
the electronic control unit (ECU) comprises a wakeup manager (WUM),
wherein the wakeup manager (WUM) is configured to be deactivated or inactive, if the method according to one of claims 1 - 7 is performed,
and wherein the wakeup manager (WUM) is configured to reactivate the connection (D) by sending a PING request message to the at least one corresponding backend device (20).

11. An electronic control unit (ECU) according to one of the preceding claims 8 to 10, **characterized in that**
the electronic control unit (ECU) comprises a managing connecting gateway (GP) for routing messages between a plurality of vehicle devices (MOD) and a variety of backend devices (20),
wherein the managing connecting gateway (GP) is configured to transmit the message to the variety of backend devices (20).

12. A vehicle (10) comprising an electronic control unit (ECU) according to one of the preceding claims 8 to 11.

13. A vehicle (10) according to the preceding claim,
**characterized in that**
the vehicle further comprises a plurality of vehicle devices (MOD), the plurality of vehicle devices (MOD) being communicatively coupled to the electronic control unit (ECU) for connection to the at least one corresponding backend device (20), wherein the plurality of vehicle devices comprise at least one of the following devices:
- sensor device,
- safety device,
- environment device,
- information device,
- entertainment device, and/or
- comfort device.

14. A computer program product comprising instructions which, when the program is executed by a computer, cause the computer to carry out a method according to any one of claims 1 to 7.

## Patentansprüche

1. Verfahren zum Steuern einer Kommunikation zwischen einem Fahrzeug (10) und mindestens einer Backend-Vorrichtung (20) in einem Fahrzeug-zu-Cloud-System, das Verfahren umfassend:
- Herstellen einer Verbindung (D) zwischen dem Fahrzeug (10) und der mindestens einen Backend-Vorrichtung (20) mit einem Keep-Alive-Zeitgeber (Tkat);
- Einstellen eines Zeitgebers (T) geringer oder gleich dem Keep-Alive-Zeitgeber (Tkat); und
- Senden einer Nachricht (m), die eine Nutzlast (pl) von dem Fahrzeug (10) enthält, an die mindestens eine Backend-Vorrichtung (20), falls innerhalb des Zeitgebers (T) keine Kommunikation zwischen dem Fahrzeug (10) und der mindestens einen Backend-Vorrichtung (20) stattgefunden hat, um die Verbindung (D) offen zu halten,
- wobei
- der Zeitgeber (T) manuell durch einen Benutzer des Fahrzeugs (10) und/oder automatisch durch eine elektronische Steuereinheit (ECU) des Fahrzeugs (10) eingestellt wird.

2. Verfahren nach Anspruch 1,
**dadurch gekennzeichnet, dass**
die Nutzlast (pl) in der Nachricht (m) einen Fahrzeugzustand (Start, Stopp) enthält und/oder die Nachricht (m) durch einen Fahrzeugzustandsanbieter (VSP) veröffentlicht wird.

3. Verfahren nach Anspruch 1 oder 2,
**dadurch gekennzeichnet, dass**
die Nutzlast (pl) in der Nachricht (m) anwendungsspezifische Daten von mindestens einer Fahrzeugvorrichtung (MOD) enthält und/oder die Nachricht (m) durch mindestens eine der folgenden Fahrzeugvorrichtungen (MOD) veröffentlicht wird:
- Sensorvorrichtung,
- Sicherheitsvorrichtung,
- Umgebungsvorrichtung,
- Informationsvorrichtung,
- Unterhaltungsvorrichtung und/oder
- Komfortvorrichtung.

4. Verfahren nach einem der vorstehenden Ansprüche,
**dadurch gekennzeichnet, dass**
der Zeitgeber (T) als der Keep-Alive-Zeitgeber (Tkat) minus 1 Sekunde eingestellt wird oder der Zeitgeber (T) auf eine Zeit in einem Bereich von 0,5 bis 0,99, insbesondere 0,7 bis 0,95, vorzugsweise 0,9 mal der Zeit des Keep-Alive-Zeitgebers (Tkat) eingestellt wird.

5. Verfahren nach einem der vorstehenden Ansprüche,
**dadurch gekennzeichnet, dass**
der Zeitgeber (T) manuell durch einen Benutzer des Fahrzeugs (10) durch ein Bedienen einer Eingabevorrichtung, vorzugsweise einer Anzeigevorrichtung an einem Fahrzeug-Armaturenbrett des Fahrzeugs (10), eingestellt wird.

6. Verfahren nach dem vorstehenden Anspruch,
**dadurch gekennzeichnet, dass**
einem Benutzer des Fahrzeugs (10) eine Bestätigungs- und/oder Anpassmöglichkeit des Zeitgebers (T) bereitgestellt wird, insbesondere durch das Bedienen einer Eingabevorrichtung, beispielsweise einer Anzeigevorrichtung an einem Fahrzeug-Armaturenbrett, des Fahrzeugs (10).

7. Verfahren nach einem der vorstehenden Ansprüche,
**dadurch gekennzeichnet, dass**
das Verfahren ferner, vor dem Senden der Nachricht, ein Ausführen einer Überprüfung umfasst, ob das Senden möglich ist, wobei insbesondere ein Kommunikationstest mit der Backend-Vorrichtung (20) ausgeführt wird.

8. Elektronische Steuereinheit (ECU), umfassend:
einen Speicher (M), in dem ein Programmcode gespeichert ist, und
eine Recheneinheit (CU), wobei bei dem Ausführen des Programmcodes durch die Recheneinheit (CU) ein Verfahren nach einem der vorstehenden Ansprüche durchgeführt wird.

9. Elektronische Steuereinheit (ECU) nach dem vorstehenden Anspruch,
**dadurch gekennzeichnet, dass**
die elektronische Steuereinheit (ECU) einen Fahrzeugzustandsanbieter (VSP) umfasst, der konfiguriert ist, um die Nutzlast (pl) in der Nachricht (m) bereitzustellen,
wobei insbesondere die elektronische Steuereinheit (ECU) einen Leistungsverwalter (PM) umfasst, der mit dem Fahrzeugzustandsanbieter (VSP) verbunden ist.

10. Elektronische Steuereinheit (ECU) nach einem der vorstehenden Ansprüche 8 oder 9,
**dadurch gekennzeichnet, dass**
die elektronische Steuereinheit (ECU) einen Wakeup-Verwalter (WUM) umfasst,
wobei der Wakeup-Verwalter (WUM) konfiguriert ist, um deaktiviert oder inaktiv zu sein, falls das Verfahren nach einem der Ansprüche 1 bis 7 durchgeführt wird,
und wobei der Wakeup-Verwalter (WUM) konfiguriert ist, um die Verbindung (D) durch das Senden einer PING-Anforderungsnachricht an die mindestens eine entsprechende Backend-Vorrichtung (20) zu reaktivieren.

11. Elektronische Steuereinheit (ECU) nach einem der vorstehenden Ansprüche 8 bis 10,
**dadurch gekennzeichnet, dass**
die elektronische Steuereinheit (ECU) ein verwaltendes Verbindungs-Gateway (GP) zum Weiterleiten von Nachrichten zwischen einer Vielzahl von Fahrzeugvorrichtungen (MOD) und einer Vielzahl von Backend-Vorrichtungen (20) umfasst,
wobei das verwaltende Verbindungs-Gateway (GP) konfiguriert ist, um die Nachricht an die Vielzahl von Backend-Vorrichtungen (20) zu übertragen.

12. Fahrzeug (10), umfassend eine elektronische Steuereinheit (ECU) nach einem der vorstehenden Ansprüche 8 bis 11.

13. Fahrzeug (10) nach dem vorstehenden Anspruch,
**dadurch gekennzeichnet, dass**
das Fahrzeug ferner eine Vielzahl von Fahrzeugvorrichtungen (MOD) umfasst, wobei die Vielzahl von Fahrzeugvorrichtungen (MOD) für die Verbindung mit der mindestens einen entsprechenden Backend-Vorrichtung (20) mit der elektronischen Steuereinheit (ECU) kommunikativ gekoppelt ist, wobei die Vielzahl von Fahrzeugvorrichtungen mindestens eine der folgenden Vorrichtungen umfasst:
- Sensorvorrichtung,
- Sicherheitsvorrichtung,
- Umgebungsvorrichtung,
- Informationsvorrichtung,
- Unterhaltungsvorrichtung und/oder
- Komfortvorrichtung.

14. Computerprogrammprodukt, umfassend Anweisungen, die, wenn das Programm durch einen Computer ausgeführt wird, bewirken, dass der Computer ein Verfahren nach einem der Ansprüche 1 bis 7 ausführt.

## Revendications

1. Procédé de commande d'une communication entre un véhicule (10) et au moins un dispositif dorsal (20) dans un système de véhicule à nuage, le procédé comprenant :
- l'établissement d'une connexion (D) entre le véhicule (10) et l'au moins un dispositif dorsal (20) avec une minuterie de maintien en vie (Tkat) ;
- la fixation d'un délai (T) inférieur ou égal à la minuterie de maintien en vie (Tkat) ; et
- l'envoi d'un message (m) contenant une charge utile (pl) du véhicule (10) à l'au moins un dispositif dorsal (20), si aucune communication entre le véhicule (10) et l'au moins un dispositif dorsal (20) n'a eu lieu pendant la minuterie (T), afin de maintenir la connexion (D) ouverte,
- dans lequel
- la minuterie (T) est réglée manuellement par un utilisateur du véhicule (10) et/ou automatiquement par une unité de commande électronique (ECU) du véhicule (10).

2. Procédé selon la revendication 1,
**caractérisé en ce que**
la charge utile (pl) du message (m) contient un état de véhicule (démarrage, arrêt), et/ou le message (m) est publié par un fournisseur d'état de véhicule (VSP).

3. Procédé selon la revendication 1 ou 2,
**caractérisé en ce que**
la charge utile (pl) du message (m) contient des données spécifiques à l'application provenant d'au moins un dispositif de véhicule (MOD) et/ou le message (m) est publié par au moins un des dispositifs de véhicule (MOD) suivants :
- dispositif capteur,
- dispositif de sécurité,
- dispositif d'environnement,
- dispositif d'informations,
- dispositif de divertissement, et/ou
- dispositif de confort.

4. Procédé selon l'une des revendications précédentes,
**caractérisé en ce que**
la minuterie (T) est réglée comme la minuterie de maintien en vie (Tkat) moins 1 seconde ou la minuterie (T) est réglée sur une durée dans une plage de 0,5 à 0,99, en particulier de 0,7 à 0,95, de préférence 0,9 fois la durée de la minuterie de maintien en vie (Tkat).

5. Procédé selon l'une des revendications précédentes,
**caractérisé en ce que**
la minuterie (T) est réglée manuellement par un utilisateur du véhicule (10) en actionnant un dispositif d'entrée, de préférence un dispositif d'affichage au niveau d'un tableau de bord, du véhicule (10).

6. Procédé selon la revendication précédente,
**caractérisé en ce que**
une possibilité de confirmation et/ou d'ajustement de la minuterie (T) est offerte à un utilisateur du véhicule (10), en particulier en actionnant un dispositif d'entrée, par exemple un dispositif d'affichage au niveau d'un tableau de bord, du véhicule (10).

7. Procédé selon l'une des revendications précédentes,
**caractérisé en ce que**
le procédé comprend en outre, avant d'envoyer le message, la réalisation d'une vérification de la possibilité d'envoi, dans lequel en particulier un test de communication avec le dispositif dorsal (20) est mis en oeuvre.

8. Unité de commande électronique (ECU) comprenant :
une mémoire (M), dans laquelle est stocké un code de programme, et
une unité de calcul (CU), dans laquelle, lors de la mise en oeuvre du code de programme par l'unité de calcul (CU), un procédé selon l'une des revendications précédentes est effectué.

9. Unité de commande électronique (ECU) selon la revendication précédente,
**caractérisée en ce que**
l'unité de commande électronique (ECU) comprend un fournisseur d'état de véhicule (VSP) configuré pour fournir la charge utile (pl) dans le message (m),
dans laquelle en particulier l'unité de commande électronique (ECU) comprend un gestionnaire de puissance (PM) connecté au fournisseur d'état de véhicule (VSP).

10. Unité de commande électronique (ECU) selon l'une des revendications précédentes 8 ou 9,
**caractérisée en ce que**
l'unité de commande électronique (ECU) comprend un gestionnaire de réveil (WUM),
dans laquelle le gestionnaire de réveil (WUM) est configuré pour être désactivé ou inactif, si le procédé selon l'une des revendications 1 à 7 est effectué,
et dans laquelle le gestionnaire de réveil (WUM) est conçu pour réactiver la connexion (D) en envoyant un message de demande PING à l'au moins un dispositif dorsal (20) correspondant.

11. Unité de commande électronique (ECU) selon l'une des revendications précédentes 8 à 10,
**caractérisée en ce que**
l'unité de commande électronique (ECU) comprend une passerelle de connexion de gestion (GP) pour l'acheminement de messages entre une pluralité de dispositifs de véhicule (MOD) et une variété de dispositifs dorsaux (20),
dans laquelle la passerelle de connexion de gestion (GP) est configurée pour transmettre le message à la variété de dispositifs dorsaux (20).

12. Véhicule (10) comprenant une unité de commande électronique (ECU) selon l'une des revendications précédentes 8 à 11.

13. Véhicule (10) selon la revendication précédente,
**caractérisé en ce que**
le véhicule comprend en outre une pluralité de dispositifs de véhicule (MOD), la pluralité de dispositifs de véhicule (MOD) étant couplés de manière communicative à l'unité de commande électronique (ECU) pour la connexion à au moins un dispositif dorsal (20) correspondant, dans lequel la pluralité de dispositifs de véhicule comprend au moins l'un des dispositifs suivants :
- dispositif capteur,
- dispositif de sécurité,
- dispositif d'environnement,
- dispositif d'informations,
- dispositif de divertissement, et/ou
- dispositif de confort.

14. Produit programme d'ordinateur comprenant des instructions, qui lorsque le programme est exécuté par un ordinateur, amènent l'ordinateur à réaliser le procédé selon l'une quelconque des revendications 1 à 7.
